# EUROPÄISCHE PATENTSCHRIFT

(11) **EP 2 993 337 B1**
(45) Veröffentlichungstag und Bekanntmachung des Hinweises auf die Patenterteilung: **06.11.2019**
(21) Anmeldenummer: 15183752.3
(22) Anmeldetag: 03.09.2015
(51) Int. Cl.: F02K 3/075, F01D 17/14, F01D 17/16, F02C 9/18, F02C 6/08, B64C 21/06

(54) **FLUGZEUGTRIEBWERK MIT MINDESTENS EINER VORRICHTUNG ZUR ENTNAHME VON ZAPFLUFT**
AIRCRAFT ENGINE WITH AT LEAST ONE DEVICE FOR THE EXTRACTION OF BLEED AIR
MOTEUR D'AÉRONEF AYANT AU MOINS UN DISPOSITIF DE PRÉLÈVEMENT D'AIR

(30) Priorität: 05.09.2014 DE 102014217829
(43) Veröffentlichungstag der Anmeldung: 09.03.2016
(73) Patentinhaber: Rolls-Royce Deutschland Ltd & Co KG, 15827 Blankenfelde-Mahlow (DE)
(72) Erfinder: PROF. DR. GÜMMER, Volker, 85411 Hohenkammer (DE); BURGHARDT, Sascha, 15370 Fredersdorf-Vogelsdorf (DE)
(74) Vertreter: Maikowski & Ninnemann Patentanwälte Partnerschaft mbB

(56) Entgegenhaltungen:
- EP-A2- 2 604 837
- DE-C- 854 894
- GB-A- 2 259 328
- US-A- 4 121 606
- US-A- 4 836 473
- US-A1- 2014 053 532
- US-B2- 7 861 968

## Beschreibung

Die Erfindung betrifft eine Vorrichtung zur Entnahme von Zapfluft mit den Merkmalen des Anspruchs 1 und ein Flugzeugtriebwerk mit den Merkmalen des Anspruchs 9.

Im Betrieb eines Flugzeugtriebwerkes kann es notwendig sein, dass eine bestimmte Luftmenge aus strömender Luft abgezweigt wird, um z.B. als Kühlluft oder Luft für die Klimatisierung einer Passagierkabine zu dienen. Die abgezweigte Luft wird im Folgenden als Zapfluft bezeichnet.

Die strömende Luft, aus der die Zapfluft entnommen wird, kann z.B. durch einen Nebenstromkanal (Bypass-Duct) strömen oder um das Flugzeugtriebwerk herumströmen.

Die bekannten Vorrichtungen zur Entnahme der Zapfluft ragen ständig in den Luftstrom und stellen auf Grund der starren Einlauföffnung einen Strömungswiderstand dar, auch wenn keine Zapfluft vom Flugzeugtriebwerk benötigt wird.

Eine Vorrichtungen zur Entnahme von Zapfluft ist beispielsweise aus der DE 854 894 C bekannt.

In der US 7 861 968 B2 werden ein Lufteinlass und ein entsprechendes Verfahren für eine Hochgeschwindigkeits-Mobilplattform beschrieben.

Die EP 2 604 837 A2 beschreibt ein System zum Leiten eines Luftstroms zu mehreren Plena.

Es besteht daher die Aufgabe, die Entnahme von Zapfluft strömungstechnisch effizient zu gestalten.

Mit einem verstellbaren Lufteinlass für die gezielte Einstellung eines Einlassquerschnitts für eine Öffnung in oder an einer Wandung des Flugzeugtriebwerkes ist es möglich, variabel, insbesondere dem Bedarf angepasst, Zapfluft zu entnehmen. Je nachdem wie der Einlassquerschnitt relativ zur strömenden Luft orientiert ist, kann die Entnahme der Zapfluft gesteuert werden.

Zur Verminderung des Strömungswiderstandes ist der verstellbare Lufteinlass mit einem Strömungsleitmittel zur Separierung einer Grenzschichtströmung gekoppelt; unabhängig von der Größe des Einlassquerschnittes. Das Strömungsleitmittel weist eine abgerundete, im Wesentlichen keilförmige Nase auf, die in die Grenzschichtströmung gerichtet ist, und ist unterhalb des Einlassquerschnitts angeordnet, so dass Grenzschichtströmungen in einem Nebenstromkanal gezielt separiert und abgeleitet werden. Dabei kann das Strömungsmittel zur Separierung der Grenzschichtströmung am Übergangsbereich des verstellbaren Lufteinlasses zur Wandung angeordnet sein.

Zur effizienten Abzweigung der Zapfluft weist eine Ausführungsform einen verstellbaren Lufteinlass mit einem gekrümmten Abschnitt auf, der in die strömende Luft ragt, wobei der Einlassquerschnitt am zuströmungszugewandten Ende des gekrümmten Abschnitts angeordnet ist.

Dabei kann in einer ersten Stellung der Einlassquerschnitt geschlossen sein oder so orientiert sein, dass keine Zapfluft oder im Wesentlichen keine Zapfluft durch eine Öffnung in der Wandung hindurchtritt.

Dabei kann in einer Ausführungsform ein erstes Element und ein zweites Element vorgesehen sein, die relativ zueinander beweglich ausgebildet sind, so dass in der ersten Stellung die Elemente den Einlassquerschnitt bilden und in der zweiten Stellung die Elemente den Einlassquerschnitt verschließen oder im Wesentlichen verschließen. Eine einfache Bauform ergibt sich, wenn das erste Element beweglich ausgebildet ist und im Wesentlichen einen rinnenförmigen Querschnitt aufweist, wobei in dem rinnenförmigen Querschnitt das zweite Element mit einer im Wesentlichen starren Platte angeordnet ist, so dass sich der Einlassquerschnitt zwischen dem ersten Element und dem zweiten Element, gegebenenfalls veränderlich, ausbildet. Die Kombination eines rinnenförmigen Elements und eines darin angeordneten plattenförmigen Teils erlaubt eine in sich stabile Bauform für den verstellbaren Lufteinlass.

In einer weiteren Ausführungsform weist das Einstellmittel einen elektrischen hydraulischen und / oder pneumatischen Aktuator zur Verstellung des Einlassquerschnitts auf. Diese können platzsparend relativ große Kräfte übertragen.

Es kann insbesondere sinnvoll sein, dass das die Nase des Strömungsleitmittels nicht im unmittelbaren Bereich des Einlassquerschnitts angeordnet ist, insbesondere besteht ein Abstand der Nase von der Kante des Einlassquerschnitts von wenigstens 10% des Umfangs des Einlassquerschnitts, insbesondere wenigstens 25% des Umfanges des Einlassquerschnitts.

Die Aufgabe wird auch durch ein Flugzeugtriebwerk mit den Merkmalen des Anspruchs 9 gelöst.

Ausführungsformen der Erfindung werden beispielhaft in den folgenden Figuren dargestellt. Dabei zeigt
- Fig. 1: eine Schnittansicht eines Flugzeugtriebwerks mit einer Ausführungsform einer Vorrichtung zur Entnahme von Zapfluft;
- Fig. 2A: eine perspektivische Ansicht einer Ausführungsform einer Vorrichtung zur Entnahme von Zapfluft in einer ersten Stellung;
- Fig. 2B: eine perspektivische Ansicht der Ausführungsform der Vorrichtung aus Fig. 2A in einer zweiten Stellung;
- Fig. 2C: eine perspektivische Ansicht der Ausführungsform aus Fig. 2A und 2B von unten;
- Fig. 3A: eine perspektivische Ansicht einer Ausführungsform einer Vorrichtung zur Entnahme von Zapfluft in einer ersten Stellung mit symbolischer Strömungsdarstellung;
- Fig. 3B: eine perspektivische Ansicht einer Ausführungsform einer Vorrichtung zur Entnahme von Zapfluft in einer zweiten Stellung mit symbolischer Strömungsdarstellung.

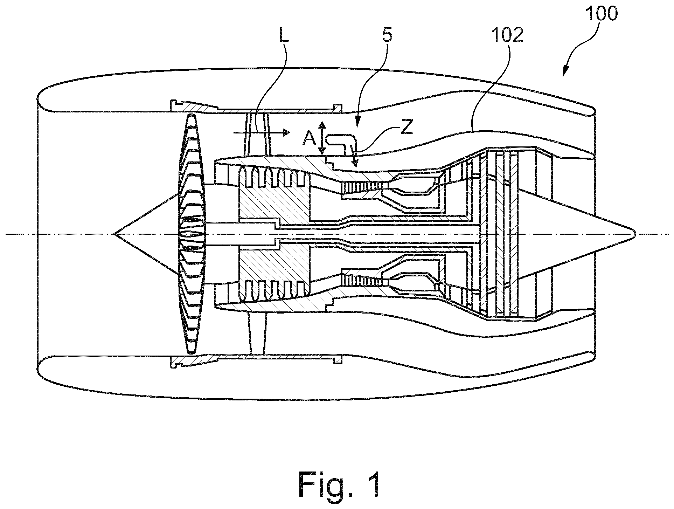

In Fig. 1 ist eine schematische Schnittansicht durch ein Flugzeugtriebwerk 100 mit einer an sich bekannten Vorrichtung 5 für die Entnahme von Zapfluft Z dargestellt. Die Vorrichtung 5 ragt hier starr und ständig in die strömende Luft L in dem Nebenstromkanal (Bypass-Duct) 101, so dass die Zapfluft Z dieser strömenden Luft L entnommen wird. Der Einlassquerschnitt A der Öffnung 1 für die strömende Luft ist hier konstant und kann im Betrieb nicht geändert werden.

Die Zapfluft Z wird nach dem Abzweigen aus der strömenden Luft L z.B. für Kühlzwecke in das Innere des Flugzeugtriebwerks 100 geleitet oder für die Klimatisierung der Fluggastkabine verwendet.

In alternativen Ausführungsformen kann die Zapfluft Z aus einer anderer Luftströmung, z.B. der Freiluftströmung um das Flugzeugtriebwerk 100 herum, abgezweigt werden und für andere Zwecke verwendet werden, wie z.B. die Klimatisierung der Kabine eines Flugzeugs.

Im Folgenden werden Ausführungsformen für die Vorrichtung 5 zur Entnahme von Zapfluft Z dargestellt, bei denen mittels eines Einstellmittels 10 eine gezielte Einstellung eines Einlassquerschnitts A für eine Öffnung 1 für die Zapfluft Z möglich ist.

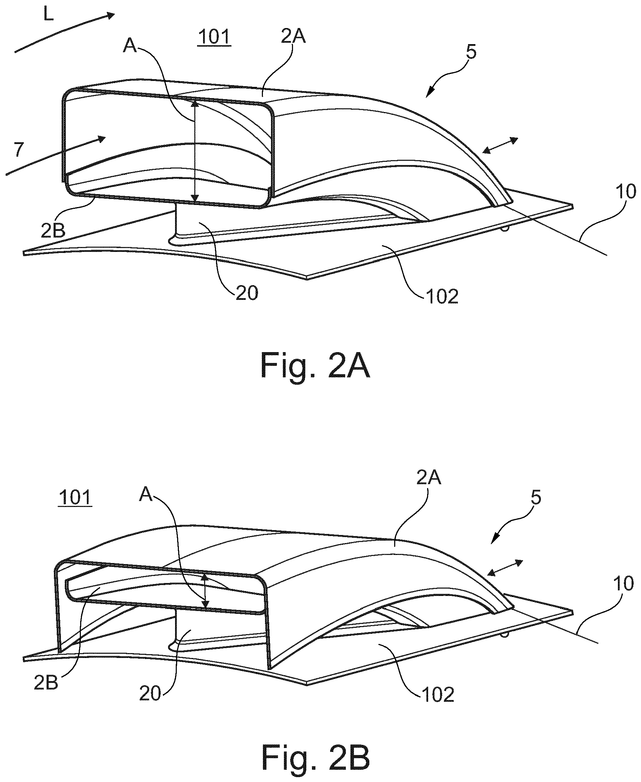

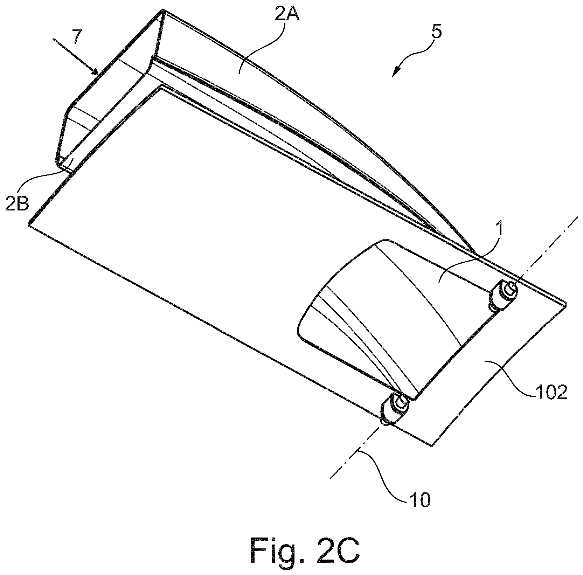

In Fig. 2A und 2B ist eine Ausführungsform einer Vorrichtung 5 zur Entnahme von Zapfluft Z in unterschiedlichen Stellungen dargestellt. Dabei weist die Vorrichtung 5 zur Entnahme von Zapfluft Z einen Einlassquerschnitt A auf. Der Einlassquerschnitt A ist über einen gebogenen Kanal mit der Öffnung 1 (siehe Fig. 2C) verbunden.

Der Einlassquerschnitt A steht in dieser Ausführungsform im Wesentlichen senkrecht zur strömenden Luft L (siehe Fig. 1). Dabei weist die Vorrichtung 5 zur Entnahme der Zapfluft Z ein erstes Element 2A auf, das oberhalb eines zweiten Elementes 2B angeordnet ist, wobei das erste Element 2A relativ zum zweiten Element 2B beweglich ausgebildet ist. Das erste Element 2A ist hier im Wesentlichen rinnenförmig in Form einer Halbschale ausgebildet, wobei die Öffnung der Rinne oder Halbschale nach unten zeigt. Das zweite Element 2B ist hier als eine Art starre Platte oder eine nach oben offene Halbschale ausgebildet, die die Rinne des ersten Elementes 2A nach unten begrenzt.

Das erste Element 2A kann um eine Achse 10 verschwenkt werden (in Fig. 2A durch einen Doppelpfeil angedeutet), so dass sich der Abstand zwischen den Elementen 2A, 2B verändert. Wird das erste Element 2A nach unten (z.B. stufenlos) verschwenkt verringert sich der Abstand, so dass der Einlassquerschnitt A kleiner wird (siehe Fig. 2B). Eine Verschwenkung nach oben vergrößert den Einlassquerschnitt A entsprechend (siehe Fig. 2A).

Damit kann in kontrollierter Weise Zapfluft Z aus der strömenden Luft L abgezweigt werden. Diese wird dann durch eine Öffnung 1 für Zapfluft (siehe Fig. 2C) in das Innere des Gehäuses des Kerntriebwerks geleitet, um z.B. bestimmte Bereiche einer Turbinenwandung zu kühlen.

Dabei kann bei geeigneter geometrischer Ausführung der Elemente 2A, 2B ein im Wesentlichen vollständiger Verschluss erreicht werden, indem der Einlassquerschnitt A gegen Null geht.

In der dargestellten Ausführungsform ist der Einlassquerschnitt A im Wesentlichen rechteckig. In alternativen Ausführungsformen kann der Einlassquerschnitt A auch andere Formen aufweisen, wenn z.B. die Oberseite des ersten Elementes 2A gekrümmt ausgebildet ist, bei entsprechender Anpassung des zweiten Elementes 2B.

Auch ist es nicht zwingend, dass das obere erste Element 2A relativ zu einem starren, unteren zweiten Element 2B beweglich ausgebildet ist. In alternativen Ausführungsformen kann dies auch anders sein, d.h. das zweite Element 2B kann beweglich sein und das erste Element 2A kann starr ausgebildet sein. Auch können beide Elemente 2A, 2B beweglich zueinander ausgebildet sein.

Unterhalb des Einlassquerschnitts A ist ein Strömungsleitelement 20 angeordnet, das dafür sorgt, dass Grenzschichtströmungen im Nebenstromkanal 101 gezielt separiert und abgeleitet werden; unabhängig von der Größe des Einlassquerschnittes A.

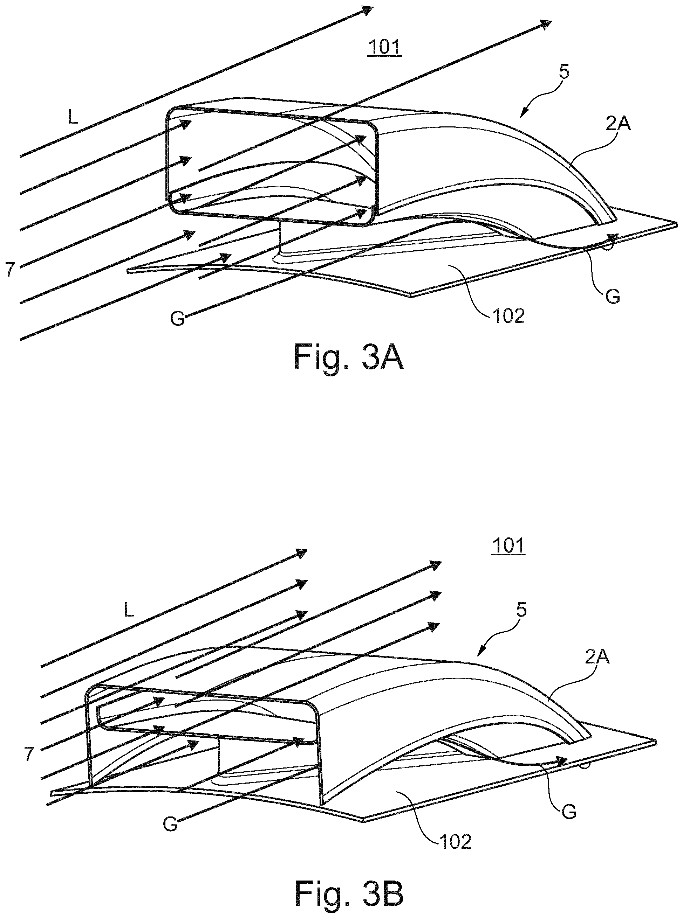

In den Fig. 3A, 3B ist die gleiche Ausführungsform wie in den Fig. 2A, 2B dargestellt, so dass auf die obige Beschreibung Bezug genommen werden kann.

Zusätzlich sind in den Fig. 3A, 3B die unterschiedlichen Strömungsanteile durch Pfeile dargestellt.

Die strömende Luft L überströmt die Vorrichtung 5 zur Entnahme der Zapfluft Z, wobei die Zapfluft Z durch die Vorrichtung 5 aufgenommen wird und zur Öffnung 1 (siehe Fig. 2C) geleitet wird. Eine Grenzschichtströmung G wird gezielt um die Vorrichtung 5 herumgeführt. Dazu ist der Verbindungsbereich zwischen den Elementen 2A, 2B und der Wandung 102 als ein Strömungsleitmittel 20 ausgebildet. In einer Draufsicht weist das Strömungsleitmittel 20 einen im Wesentlichen dreieckigen Querschnitt auf, wobei die Spitze (insbesondere einer Nase) des Dreiecks abgerundet in die Strömung zeigt.

Günstig ist es dabei, wenn die sich dem Lufteinlass nähernde Strömung L die Außenflächen des den Einlassquerschnitts A des Lufteinlasses umgebende Leitung entlang ihres gesamten Umfangs benetzen und umströmen kann. Dies ermöglicht, dass eine Grenzschicht, die im Bereich des Lufteinlasses auf der Wandung gegeben ist, von dem in den Lufteinlass aufgenommenen Luftstrom getrennt wird. Dies ist für eine Maximierung des im Lufteinlauf erreichbaren Totaldruckniveaus von Vorteil. Weiterhin günstig ist es, wenn der Lufteinlass im Übergangsbereich zur Wandung so ausgestaltet ist, dass die sich dem Fuß des Einlaufes nähernde Grenzschicht möglichst wenig Aufstau erfährt, zu erzielen durch eine schlanke Gestalt des von der Grenzschicht umströmten Profils des Lufteinlassfußes. Eine abgerundete aber dennoch im Wesentlichen keilförmige Nase des besagten Profils ist dabei von Vorteil. Es ist vorteilhaft, wenn die Nase des Profils nicht direkt oder im unmittelbaren Bereich des Einlassquerschnittes (A) des Lufteinlasses vorgesehen ist. Vorteilhaft ist ein Abstand der Nase von der Kante des Einlassquerschnitts (A) von wenigstens 10% des Umfanges des Einlassquerschnitts (A). Weitere Vorteile erbringt eine Beabstandung von wenigstens 25% des Umfanges des Einlassquerschnitts (A).

### Bezugszeichenliste

- 1: Öffnung für Zapfluft
- 2A: oberes, (bewegliches) Element
- 2B: unteres, (stationäres) Element

- 5: Vorrichtung für die Entnahme von Zapfluft

- 10: Achse

- 20: Strömungsleitelement

- 100: Flugzeugtriebwerk
- 101: Nebenstromkanal
- 102: Wandung (Fairing)

- A: Einlassquerschnitt
- G: Grenzschichtströmung
- L: strömende Luft
- Z: Zapfluft

## Patentansprüche

1. Vorrichtung (5) zur Entnahme von Zapfluft aus strömender Luft in einem Nebenstromkanal (101) eines Flugzeugtriebwerks, mit einem Mittel zur gezielten Einstellung eines Einlassquerschnitts (A) für eine Öffnung (1) in oder im Bereich einer Wandung (102) des Flugzeugtriebwerkes (100),
**gekennzeichnet durch**
ein Strömungsleitmittel (20) für eine Separierung einer Grenzschichtströmung (G) unabhängig von der Größe des Einlassquerschnittes (A), wobei das Strömungsleitmittel (20) eine abgerundete, im Wesentlichen keilförmige Nase aufweist, die in die Grenzschichtströmung (G) gerichtet ist, und das Strömungsleitmittel (20) unterhalb des Einlassquerschnitts (A) angeordnet ist, so dass Grenzschichtströmungen im Nebenstromkanal (101) gezielt separiert und abgeleitet werden.

2. Vorrichtung nach Anspruch 1, **dadurch gekennzeichnet, dass** das Mittel ein verstellbarer Lufteinlass ist, wobei das Strömungsleitmittel (20) für die Grenzschichtströmung (G) am Übergangsbereich des verstellbaren Lufteinlasses zur Wandung (102) angeordnet ist.

3. Vorrichtung nach mindestens einem der vorhergehenden Ansprüche, **gekennzeichnet durch** einen gekrümmten Abschnitt, der in die strömende Luft (L) ragt, wobei der Einlassquerschnitt (A) am zuströmungszugewandten Ende des gekrümmten Bereiches angeordnet ist.

4. Vorrichtung nach mindestens einem der vorhergehenden Ansprüche, **dadurch gekennzeichnet, dass** in einer ersten Stellung der Einlassquerschnitt (A) geschlossen ist oder so orientiert ist, dass keine Zapfluft (Z) oder im Wesentlichen keine Zapfluft (Z) durch die Öffnung (1) hindurchtritt.

5. Vorrichtung nach mindestens einem der vorhergehenden Ansprüche, **gekennzeichnet durch** ein erstes Element (2A) und ein zweites Element (2B), die zueinander relativ beweglich ausgebildet sind, so dass in der ersten Stellung die Elemente (2A, 2B) den Einlassquerschnitt (A) bilden und in der zweiten Stellung die Elemente (2A, 2B) den Einlassquerschnitt (A) verschließen oder im Wesentlichen verschließen.

6. Vorrichtung nach Anspruch 5, **dadurch gekennzeichnet, dass** das erste Element (2A) beweglich ausgebildet ist und im Wesentlichen einen rinnenförmigen Querschnitt aufweist, wobei in dem rinnenförmigen Querschnitt das zweite Element (2B) mit einer im Wesentlichen starren Platte oder starren Schale angeordnet ist, so dass sich der Einlassquerschnitt (A) zwischen dem ersten Element (2A) und dem zweiten Element (2B) ausbildet.

7. Vorrichtung nach mindestens einem der vorhergehenden Ansprüche, **gekennzeichnet durch** ein elektrisches, hydraulisches und / oder pneumatisches Einstellmittel zur Verstellung der Elemente (2A, 2B).

8. Vorrichtung nach mindestens einem der vorhergehenden Ansprüche, **dadurch gekennzeichnet, dass** das die Nase des Strömungsleitmittels (20) nicht im unmittelbaren Bereich des Einlassquerschnitts (A) angeordnet ist, insbesondere besteht ein Abstand der Nase von der Kante des Einlassquerschnitts (E) von wenigstens 10% des Umfanges das Einlassquerschnitts (A), insbesondere von wenigstens 25% des Umfanges des Eintrittsquerschnitts (A).

9. Flugzeugtriebwerk mit mindestens einer Vorrichtung zur Entnahme von Zapfluft (Z) nach mindestens einem der Ansprüche 1 bis 8.

## Claims

1. Device (5) for extracting bleed air from flowing air in a secondary flow duct (101) of an aircraft engine, having a means for the targeted setting of an inlet cross section (A) for an opening (1) in or in the region of a wall (102) of the aircraft engine (100),
**characterized by**
a flow-guiding means (20) for separating a boundary layer flow (G) independently of the size of the inlet cross section (A), wherein the flow-guiding means (20) has a rounded, substantially wedge-shaped nose which is directed into the boundary layer flow (G), and the flow-guiding means (20) is arranged below the inlet cross section (A) such that boundary layer flows in the secondary flow duct (101) are separated and channelled away in a targeted manner.

2. Device according to Claim 1, **characterized in that** the means is an adjustable air inlet, wherein the flow-guiding means (20) for the boundary layer flow (G) is arranged at the transition region of the adjustable air inlet to the wall (102).

3. Device according to at least one of the preceding claims, **characterized by** a curved portion which projects into the flowing air (L), wherein the inlet cross section (A) is arranged at the inflow-facing end of the curved region.

4. Device according to at least one of the preceding claims, **characterized in that** the inlet cross section (A) is closed in a first position or is oriented in such a way that no bleed air (Z) or substantially no bleed air (Z) passes through the opening (1).

5. Device according to at least one of the preceding claims, **characterized by** a first element (2A) and a second element (2B) which are designed to be movable relative to one another such that the elements (2A, 2B) form the inlet cross section (A) in the first position and the elements (2A, 2B) close or substantially close the inlet cross section (A) in the second position.

6. Device according to Claim 5, **characterized in that** the first element (2A) is designed to be movable and has substantially a channel-shaped cross section, wherein the second element (2B) is arranged in the channel-shaped cross section with a substantially rigid plate or rigid shell such that the inlet cross section (A) is formed between the first element (2A) and the second element (2B) .

7. Device according to at least one of the preceding claims, **characterized by** an electric, hydraulic and/or pneumatic adjusting means for adjusting the elements (2A, 2B).

8. Device according to at least one of the preceding claims, **characterized in that** the nose of the flow-guiding means (20) is not arranged in the immediate region of the inlet cross section (A), with in particular a distance between the nose and the edge of the inlet cross section (E) being at least 10% of the circumference of the inlet cross section (A), in particular at least 25% of the circumference of the inlet cross section (A).

9. Aircraft engine having at least one device for extracting bleed air (Z) according to at least one of Claims 1 to 8.

## Revendications

1. Dispositif (5) de soutirage de l'air de prélèvement dans de l'air en écoulement dans un canal de flux secondaire du moteur d'avion, ledit dispositif comprenant un moyen d'ajustement sélectif d'une section transversale d'entrée (A) pour une ouverture (1) ménagée dans une paroi (102), ou dans la région d'une paroi (102), du moteur d'avion (100),
**caractérisé par**
un moyen de guidage d'écoulement (20) destiné à séparer un écoulement de couche limite (G) indépendamment de la dimension de la section transversale d'entrée (A), le moyen de guidage d'écoulement (20) comportant un nez arrondi, sensiblement en forme de coin, qui est dirigé dans l'écoulement de couche limite (G) et le moyen de guidage d'écoulement (20) étant disposé au-dessous de la section transversale d'entrée (A) de manière à séparer et dériver des écoulements de couche limite de manière ciblée dans le canal de flux secondaire (101).

2. Dispositif selon la revendication 1, **caractérisé en ce que** le moyen est une entrée d'air réglable, le moyen de guidage d'écoulement (20) destiné à l'écoulement de couche limite (G) étant disposé au niveau de la région de transition de l'entrée d'air réglable par rapport à la paroi (102).

3. Dispositif selon l'une au moins des revendications précédentes, **caractérisé par** une partie incurvée faisant saillie dans l'air en écoulement (L), la section transversale d'entrée (A) étant disposée à l'extrémité de la partie incurvée qui est dirigée vers l'écoulement affluent.

4. Dispositif selon l'une au moins des revendications précédentes, **caractérisé en ce que**, dans une première position, la section transversale d'entrée (A) est fermée ou orientée de sorte qu'aucun air de prélèvement (Z) ou pratiquement aucun air de prélèvement (Z) ne passe par l'ouverture (1).

5. Dispositif selon l'une au moins des revendications précédentes, **caractérisé par** un premier élément (2A) et un deuxième élément (2B) qui sont conçus pour être mobiles l'un par rapport à l'autre de sorte que, dans la première position, les éléments (2A, 2B) forment la section transversale d'entrée (A) et, dans la deuxième position, les éléments (2A, 2B) ferment ou ferment sensiblement la section transversale d'entrée (A).

6. Dispositif selon la revendication 5, **caractérisé en ce que** le premier élément (2A) est conçu pour être mobile et présente une section transversale sensiblement en forme de rainure, le deuxième élément (2B) étant disposé dans la section transversale en forme de rainure avec une plaque sensiblement rigide ou une coque sensiblement rigide de sorte que la section transversale d'entrée (A) est formée entre le premier élément (2A) et le deuxième élément (2B).

7. Dispositif selon l'une au moins des revendications précédentes, **caractérisé par** un moyen de réglage électrique, hydraulique et/ou pneumatique destiné à régler des éléments (2A, 2B).

8. Dispositif selon l'une au moins des revendications précédentes, **caractérisé en ce que** le nez du moyen de guidage d'écoulement (20) n'est pas disposé dans la région immédiate de la section transversale d'entrée (A), en particulier la distance du nez au bord de la section transversale d'entrée (E) est égale à au moins 10 % de la circonférence de la section transversale d'entrée (A), en particulier à au moins 25 % de la circonférence de la section transversale d'entrée (A).

9. Moteur d'avion comprenant au moins un dispositif de soutirage de l'air de prélèvement (Z) selon l'une au moins des revendications 1 à 8.
